# DEMANDE DE BREVET EUROPEEN

(11) **EP 1 168 155 A1**
(43) Date de publication de la demande: **02.01.2002**
(21) Numéro de dépôt: 01490017.9
(22) Date de dépôt: 22.05.2001
(51) Int. Cl.: G06F 3/147, B67D 5/22, G07F 13/02

(54) **Dispositif d'affichage commandable à distance par voie hertzienne et à faible consommation d'énergie**

(30) Priorité: 30.06.2000 FR 0008539
(71) Demandeur: SA Centaure Systems, 62290 Noeux Les Mines (FR)
(72) Inventeur: Sinaeve, Pascal, 59554 Raillencourt Saint Olle (FR); Zavodszki, Eric, 59700 Marcq en Baroeul (FR)
(74) Mandataire: Matkowska, Franck

(57) **Abrégé**

Le dispositif (1), comporte une source d'alimentation électrique (8), plusieurs afficheurs (3) électromécaniques, une unité centrale (5) conçue pour commander chaque afficheur (3). Il comprend également au moins un contacteur (7c) qui permet d'ouvrir ou fermer le circuit d'alimentation électrique de l'unité centrale (5) et de chaque afficheur (3), un module (6), qui permet la réception de données transmises par voie hertzienne, et l'envoi de ces données à l'unité centrale (5), et un module (7b) de mise en veille et de réveil, qui en fonctionnement est en permanence alimenté par l'alimentation électrique (8), et qui a pour fonction d'une part de commander la fermeture du contacteur (7c) sous la commande d'au moins un premier signal (C.d et/ou M), délivré par le module de réception (6), et d'autre part de commander l'ouverture du contacteur (7c) sous la commande d'un deuxième signal ( Pwoff) délivré par l'unité centrale (5).

## Description

La présente invention concerne le domaine des afficheurs électromécaniques, et plus particulièrement la commande à distance par voie hertzienne de ce type d'afficheur. Elle trouve par exemple, mais non exclusivement, son application à l'affichage et à la modification à distance des prix des carburants sur des stations services.

Dans le présent texte, on désigne par « afficheur électromécanique », tout dispositif qui d'une manière générale peut être commandé électriquement pour l'affichage d'une information nouvelle, et qui, une fois le changement d'information affichée effectué, est apte à maintenir l'information affichée sans qu'il soit nécessaire de l'alimenter électriquement. Un exemple connu de ce type d'afficheurs est un afficheur électromécanique, sept segments, à palettes mobiles aimantées, tel que celui décrit dans la demande de brevet français FR-A-2 561 016 ou dans la demande de brevet français FR-A-2 729 493. Il existe également des afficheurs similaires dont les élément mobiles ne sont pas des palettes, mais des pastilles, par exemple de forme circulaire, agencées sous la forme d'une matrice.

La présente invention vise à proposer un dispositif d'affichage qui présente l'avantage d'être commandable à distance et très faiblement consommateur d'énergie électrique.

Ce dispositif d'affichage est connu en ce qu'il comporte une source d'alimentation électrique, un ou plusieurs afficheurs électromécaniques, une unité centrale conçue pour commander chaque afficheur, et un circuit d'alimentation reliant la source d'alimentation électrique à l'unité centrale et à chaque afficheur.

De manière caractéristique selon l'invention, le dispositif d'affichage comprend au moins un contacteur qui permet d'ouvrir ou de fermer le circuit d'alimentation électrique de l'unité centrale et de chaque afficheur, un module de réception, qui en fonctionnement est en permanence alimenté par l'alimentation électrique, et qui permet la réception de données transmises par voie hertzienne, et l'envoi de ces données à l'unité centrale pour la commande du ou des afficheurs, et un module de mise en veille et de réveil, qui en fonctionnement est en permanence alimenté par l'alimentation électrique, et qui a pour fonction d'une part de commander la fermeture du contacteur, sous la commande d'au moins un premier signal (C.d et/ou M), délivré par le module de réception, et d'autre part de commander l'ouverture du contacteur sous la commande d'un deuxième signal ( Pwoff) délivré par l'unité centrale.

L'invention a également pour autre objet un ensemble d'affichage. Cet ensemble se caractérise par une pluralité de dispositifs d'affichage distants conformes à l'invention et par une station qui permet l'envoi par voie hertzienne, à tout ou partie des dispositifs d'affichage, de messages pour la mise à jour des informations affichées.

D'autres caractéristiques et avantages de l'invention apparaîtront plus clairement à la lecture de la description ci-après d'une variante préférée de réalisation, laquelle description est donnée à titre d'exemple non limitatif et en référence aux dessins annexés sur lesquels :
- la figure 1 représente de manière schématique un ensemble d'affichage selon l'invention,
- la figure 2 est un synoptique de l'architecture électronique d'un dispositif d'affichage de l'ensemble de la figure 1, qui peut fonctionner selon deux modes distincts ( mode « DATA » ou mode « Message »),
- la figure 3 est un schéma électrique détaillé d'une interface du dispositif d'affichage de la figure 2, dont l'une des fonctionnalités est la mise en veille et le réveil de l'alimentation de l'unité centrale et des afficheurs du dispositif d'affichage,
- la figure 4 représente les principales étapes mises en oeuvre en cas d'activation de la fonction réveil par l'interface de la figure 3,
- la figure 5 représente les principales étapes de fonctionnement du dispositif d'affichage en mode « DATA »,
- la figure 6 représente les principales étapes de fonctionnement du dispositif d'affichage en mode « Message »,
Et la figure 7 représente de manière schématique, vue de face, un afficheur électromécanique, sept segments, à palettes mobiles, équipé de capteurs détectant la position de chaque palette.

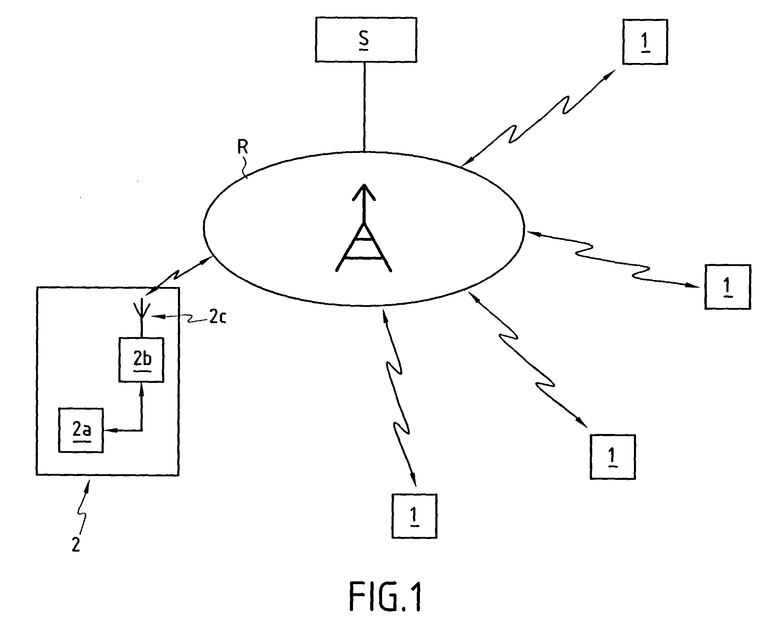

On a représenté sur la figure 1 une pluralité de dispositifs d'affichage 1 conformes à l'invention, qui sont distants les uns des autres, et une station 2 qui permet la commande à distance, par voie hertzienne (modulation d'une onde porteuse haute fréquence), de chaque dispositif d'affichage 1. La station 2 est équipée d'une unité de traitement 2a, d'un module émetteur/récepteur 2b et d'une antenne HF 2c. L'unité de traitement 2a est programmée d'une part pour permettre à un utilisateur d'élaborer un message, et de sélectionner les dispositifs d'affichages 1 devant recevoir ce message, et d'autre part pour envoyer le message élaboré par l'utilisateur à chacun des dispositifs d'affichage 1 sélectionnés, en vue de l'affichage de ce message.

Dans une application particulière, donnée à titre d'exemple non limitatif de l'invention, chaque dispositif d'affichage 1 est monté sur le site d'une station service de carburant et permet l'affichage du prix de chaque type de carburant (essence, diesel, etc..). L'unité de traitement 2a de la station 2 permet à un utilisateur de saisir un nouveau prix pour un carburant, et d'envoyer un message à tous les dispositifs d'affichage 1 sélectionnés ( par exemple tous les dispositifs d'affichage situés dans un même secteur géographique pour la mise à jour de l'affichage du prix du carburant concerné). Chaque dispositif d'affichage 1 est conçu pour, après réception du nouveaux prix d'un type donné de carburant, mettre à jour automatiquement l'affichage du prix de ce carburant.

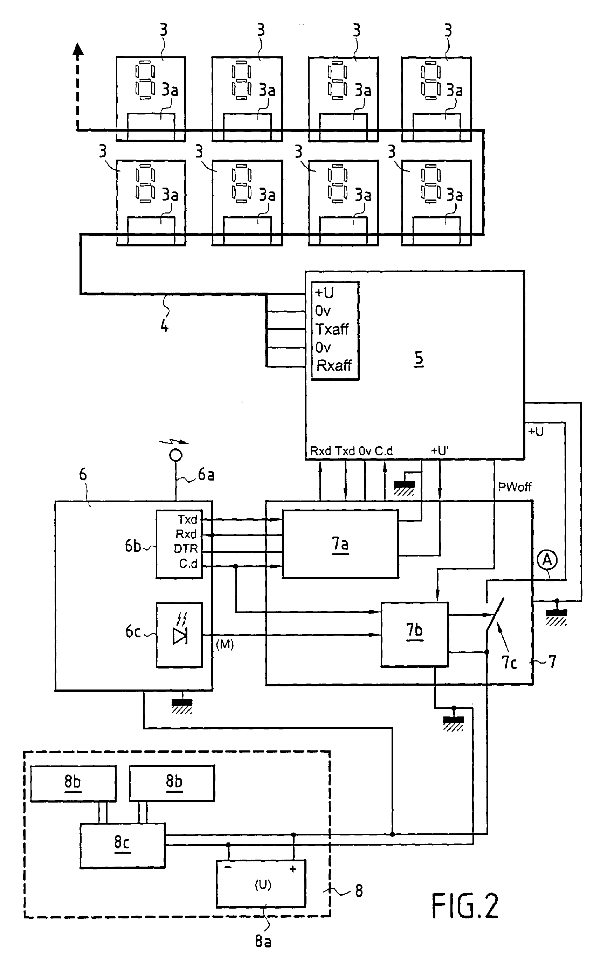

En référence à la figure 2, un dispositif d'affichage 1 comporte :
- une pluralité d'afficheurs 3 connectés en parallèle à un bus 4 , pour leur commande et leur alimentation électrique,
- une unité centrale 5 qui permet l'alimentation électrique et la commande de chaque afficheur 3 via le bus 4,
- un module 6 de réception et d'émission de données, équipé d'une antenne 6a HF, et apte à échanger des données par voie hertzienne avec la station de base 2,
- une interface 7
- une source d'alimentation électrique autonome 8.

### Afficheurs (3)

Chaque afficheur 3 est par exemple un afficheur électromécanique, sept segments à palettes mobiles aimantées commandées par électroaimants, la face visible de chaque palette mobile étant de préférence recouverte d'un revêtement réfléchissant coloré, (par exemple de couleur jaune). Ce type d'afficheur est connu en soit et est décrit par exemple dans la demande de brevet français FR-A-2 561 016. L'invention n'est toutefois pas limitée à ce type particulier d'afficheur, mais s'étend à tout type d'afficheur connu, qui d'une manière générale permet de maintenir une information affichée sans être alimenté électriquement, et qui est commandable électriquement pour l'affichage d'une nouvelle information.

Plus particulièrement, dans l'exemple illustré sur la figure 2, chaque afficheur 3 est équipé d'une carte électronique 3a (" driver ") qui est connectée au bus 4, qui permet à chaque afficheur 3 de dialoguer avec l'unité centrale 5 via le bus de communication 4. La fonction principale (connue en soit) de chaque carte électronique 3a est de réceptionner la donnée caractéristique de la valeur à afficher qui lui est adressée par l'unité centrale 5 sur le bus 4 et de réaliser la commande de puissance des électro-aimants qui contrôle la rotation de chaque palette en sorte d'afficher la nouvelle donnée.

### Unité centrale (5)/afficheurs (3)

L'unité centrale 5 est constituée par une unité de traitement programmée (processeur de type microcontrôleur ou microprocesseur associé à de la mémoire vive (RAM), et à de la mémoire morte (ROM) contenant le programme résident exécuté par le processeur). Dans l'exemple illustré sur la figure 2, cette unité centrale 5 est reliée à chaque carte électronique 3a des afficheurs 3 par une liaison série (bus 4/ signaux RxAff et TxAff), de type boucle de courant. L'échange de données entre l'unité centrale 5 et un afficheur 3, au moyen de cette liaison série, est réalisé selon un protocole de communication prédéfini, chaque donnée échangée entre l'unité centrale 5 et un afficheur 3 étant par exemple une trame composée d'un bit de départ, d'un octet (par exemple caractère à afficher) et d'un bit d'arrêt.

### Module d'émission/réception HF (6)

Ce module d'émission/réception HF (6) comprend un port de communication 6b qui est relié à l'unité centrale 5 ( figure 2/signaux Txd, Rxd, DTR, C.d), par l'intermédiaire d'un module 7a de l'interface 7, lequel module 7a assure la mise en forme et l'adaptation des signaux (Txd, Rxd, DTR, C.d). La liaison entre l'unité centrale 5 et le module 6 au travers de l'interface 7 est une liaison série de type RS232 fonctionnant à un débit donnée (par exemple 9600bauds), les données échangées (signaux Rxd et Txd) entre le module 6 et l'unité centrale 5 étant transmises sous forme de trames successives au format : un bit de départ, un octet, et un bit d'arrêt.

Plus particulièrement, le module d'émission/réception 6 ( de même que le module émetteur/récepteur 2b de la station 2) est un module GSM, permettant de recevoir ou d'émettre des données sur deux ondes porteuses HF différentes (par exemple 900MHz et 1800Mhz). Conformément à la norme de communication du réseau GSM, ce module possède deux modes de fonctionnement différents: un mode dit « DATA » et un mode dit « Message » (encore appelé mode « SMS »)

### Mode « DATA » /Traitement d'un appel entrant

En mode « DATA » , la station 2 via son émetteur/récepteur 2b établit une communication directement avec le module d'émission/réception 6 d'un dispositif d'affichage 1, en demandant préalablement l'allocation d'un canal de communication à une station de base du réseau GSM ( figure 1 / réseau R). Une fois le canal de communication alloué et la communication établie entre la station 2 et un dispositif d'affichage 1, ces derniers peuvent échanger à distance des données via ce canal de communication, jusqu'à la rupture de la communication par l'un des deux modules émetteur/récepteur HF 2b ou 6. Dans ce mode de communication, le module 6 d'un dispositif d'affichage 1, lors de la réception d'un appel entrant émanant de la station 2, gère en sortie le signal (C.d) qui est du type tout ou rien. Lorsqu'aucune porteuse n'est établie entre le module 2b de la station 2 et le module 6 d'un dispositif d'affichage 1, le signal C.d est à l'état bas. Lorsqu'une communication est établie entre le module 2b de la station 2 et le module 6 d'un dispositif d'affichage 1, le module 6 sur détection automatique de la porteuse, fait basculer le signal C.d à l'état haut. Ce signal C.d reste à l'état haut tant que la communication est en cours. En fin de communication (absence de porteuse), le module 6 du dispositif d'affichage 1 fait de nouveau basculer le signal C.d à l'état bas. Pendant la phase de communication, l'unité centrale 5 du dispositif d'affichage peut échanger directement des données avec la station 2 via le module 6, qui fonctionne alors comme un modulateur/démodulateur usuel.

### Mode « Message » /Traitement d'un appel entrant

Le mode « Message » permet l'envoi de messages courts entre la station 2 et un dispositif d'affichage 1. La particularité de ce mode est que les messages envoyés transitent par un serveur dédié (S) du réseau GSM (figure 1), qui est chargé de router les messages et de gérer les files d'attente dans le cas où le module d'émission/réception ( 2b ou 6 selon le cas) auquel le message est adressé n'est pas joignable (impossibilité d'établir une porteuse de communication). Dans ce mode de communication, lorsque le module 6 d'un dispositif d'affichage 1 reçoit un appel entrant de la part du serveur de routage et réceptionne le message correspondant (envoyé par le serveur avec un temps différé plus ou moins long par rapport à l'émission par la station 2 vers le serveur), ce module 6 stocke en mémoire vive interne le message reçu. En mode « Message », le module 6 délivre un signal (M) de type tout ou rien, qui est à l'état bas lorsqu'aucun message n'est en attente en mémoire, et qui est à l'état haut tant qu'un message est stocké en mémoire du module 6, et n'a pas été récupéré par l'unité centrale 5. Eventuellement, le module 6 comporte également une diode électroluminescente 6c qui est allumée tant qu'un message reçu en mémoire du module 6 n'a pas été récupéré par l'unité central 5 ( signal M à l'état haut).

### Interface 7

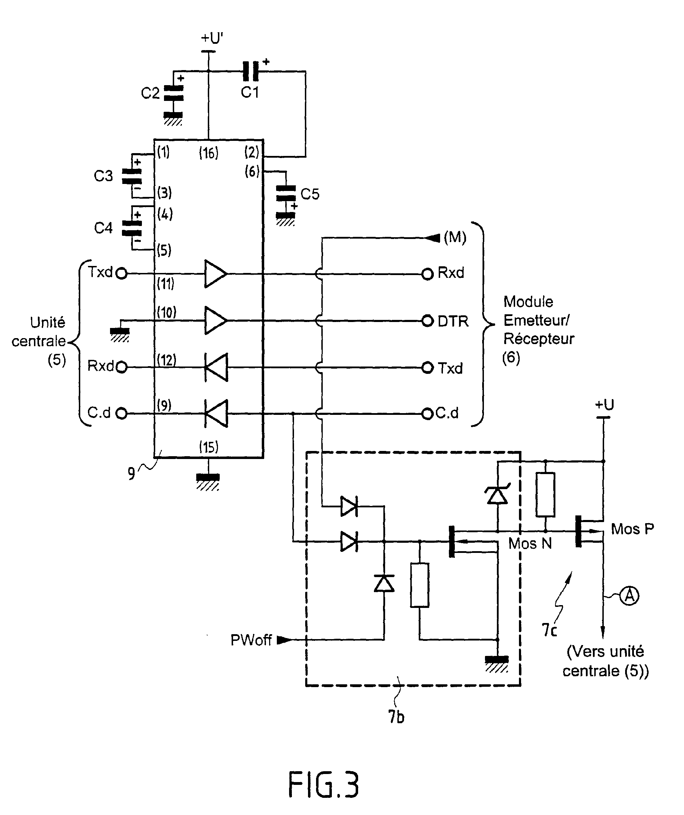

L'interface 7 remplit deux fonctions. Elle permet tout d'abord l'adaptation et la mise en forme des signaux (Rxd, ,TXd et DTR) entre le module d'émission/réception 6 et l'unité centrale 5. Cette première fonction est assurée par le module 7a de l'interface 7. Dans un exemple de réalisation, ce module 7a était réalisé au moyen d'un circuit intégré 9 (MAX 233A), câblé conformément au schéma de la figure 3. Sur le schéma de la figure 3, les condensateurs C1 à C5 sont par exemple des condensateurs de 100nF. Le circuit intégré 9 est alimenté sous une tension continue U' ( par exemple 5v) , fournie par l'unité centrale 5, à partir de l'énergie électrique qui lui est fournie par la batterie 8a. De ce fait, le circuit 9 est alimenté uniquement lorsque l'unité centrale 5 est elle-même alimentée par la batterie 8a.

L'interface 7 permet également de commander l'alimentation de l'unité centrale 5. Cette seconde fonction qui va à présent être détaillée est réalisée par le module 7b en combinaison avec le contacteur 7c, à partir des signaux précités (C.d) et (M) délivrés par le module d'émission/réception 6, et également d'un signal (Pwoff) qui est délivré par l'unité centrale 5 à destination du module 7b ,et qui est un signal pouvant prendre trois états différents : état haut (PWoff = 1) , état bas (PWoff = 1) , état non alimenté (PWoff = ∞)

### Alimentation électrique / Etats « veille » et « actif »

Dans l'exemple particulier illustré, la source d'alimentation automne 8 comprend une batterie 8a et plusieurs capteurs solaires 8b (par exemple sous la forme de panneaux solaires) qui permettent de charger la batterie à partir de l'énergie solaire captée et par l'intermédiaire d'un module électronique de régulation 8c. La batterie 8a délivre en sortie une tension continue U ( par exemple 24v).

Le dispositif d'affichage 1, d'un point de vue de son alimentation électrique, possède deux états: un état dit « veille » dans lequel il consomme très peu d'énergie et un état dit « actif ». Le dispositif d'affichage 1 est « actif » pendant la période de temps nécessaire à la commande des afficheurs 3, pour l'affichage d'un nouveau message. Le reste du temps, le dispositif d'affichage 1 est en « veille ».

Le passage d'un état « veille » à un état « actif » correspondant à la mise en oeuvre de la fonction « réveil » ci-après détaillée, et le passage d'un état « actif » à un état « veille » correspondant à la mise en oeuvre de la fonction « coupure » ci-après détaillée, sont commandés par l'interface 7.

Le module d'émission/réception 6 et le module 7b de l'interface 7 qui assure la fonction « réveil », sont reliés à la batterie 8a en sorte d'être permanence alimentés. Ils consomment en pratique très peu d'énergie, ce qui évite de décharger inutilement la batterie 8 lorsque le dispositif d'affichage est en « veille ».

L'unité centrale 5 pour son alimentation électrique est reliée à la batterie 8a par un courant d'alimentation comprenant le contacteur 7c (interface 7) dont la fermeture et l'ouverture sont commandés par le module 7b de l'interface 7. Lorsque le dispositif d'affichage 1 est à l'état « veille », le contacteur 7c est ouvert, l'unité centrale 5 n'étant plus alimentée par la batterie 8a. A l'inverse, lorsque le dispositif d'affichage 1 est à l'état « actif », le contacteur 7c est fermé, l'unité centrale 5 étant alimentée (tension continue U) par la batterie 8a.

L'alimentation électrique des afficheurs 3 (cartes électroniques 3a) est assurée par l'unité centrale 5 via le bus 4, à partir de l'énergie électrique fournie à l'unité centrale par la batterie 8a. Ainsi, lorsque l'unité centrale 5 n'est plus alimentée (contacteur 7c ouvert/ état « veille »), les afficheurs 3 ne sont plus alimentés. A l'inverse, lorsque l'unité centrale 5 est de nouveau temporairement alimentée (contacteur 7c fermé/ état « actif »), les afficheurs 3 sont également temporairement alimentés.

### Fonction « réveil »

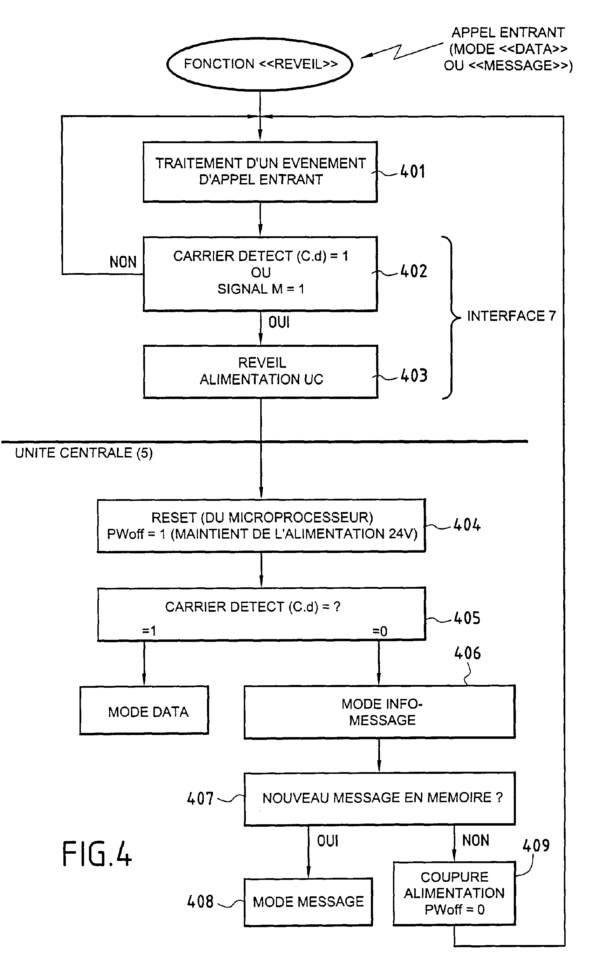

Le synoptique fonctionnel général de cette fonction est donné figure 4. Sur ce synoptique l'étape (401) est réalisée par le module 6 du dispositif d'affichage 1, qui est en attente d'un appel entrant soit directement de la station 2 dans le cas du mode « DATA » précité, soit par le serveur de routage (5) du réseau dans le mode « message ». Tel que cela a été précédemment expliqué, après traitement d'un appel entrant en mode « DATA », le module 6 bascule le signal C.d à l'état haut ( C.d =1) ou après traitement d'un appel entrant en mode « DATA », le module 6 bascule le signal M à l'état haut (M =1). Le module 7b de l'interface 7 contrôle en permanence l'état de ces deux signaux en réalisant une fonction « ou » sur ces deux signaux (test 402 de la figure 4). Lorsque l'un des deux signaux est à l'état haut, le module 7b commande automatiquement la fermeture du contacteur 7c, ce qui permet l'alimentation de l'unité centrale 5 (figure 4/étape 403).

L'alimentation de l'unité centrale 5 se traduit par une réinitialisation du processeur de l'unité centrale 5 ( figure 4 / étape 404), et par un basculement à l'état haut du signal Pwoff, lequel signal était jusqu'à alors dans le troisième état précité (PWoff = ∞), du fait de l'absence d'alimentation l'unité centrale 5.

Après son initialisation, le processeur de l'unité centrale démarre un programme résident en mémoire commençant par un test de l'état du signal C.d ( figure 4 / test 405).

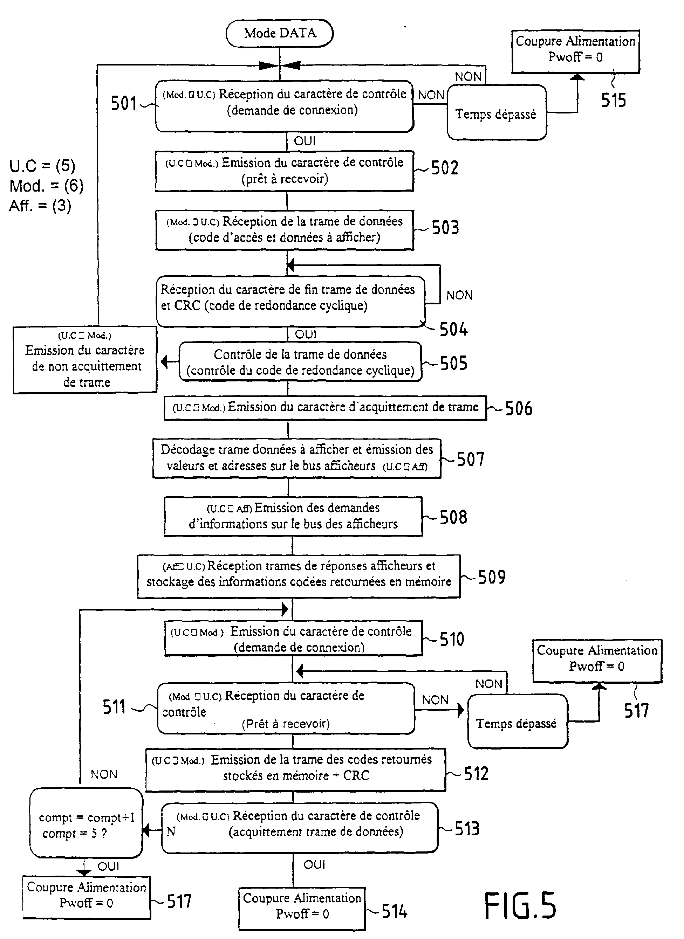

Si ce signal C.d est détecté à l'état haut (C.d = 1), on entre alors en mode de communication « DATA » (figure 4 / étape 406). Les principales étapes de fonctionnement de l'unité centrale 5 et du module émission/réception 6 dans ce mode « DATA » sont données par le synoptique de la figure 5. Dans ce mode « DATA », dans un premier temps l'unité centrale 5 reçoit, sous la forme d'une trame de données, un message qui lui est envoyé par la station 2 via le module d'émission/réception 6 (figure 5 / étapes 501 à 506). Ce message contient par exemple, pour chaque afficheur devant être mis à jour, l'adresse de l'afficheur et la nouvelle information devant être affichée. Dans un deuxième temps (figure 5/étape 507), l'unité centrale 5 décode la trame reçue, et envoie, via le bus 4, à la carte électronique 3a de chaque afficheurs 3 concerné par cette trame, l'information qui était associée dans la trame à l'adresse de cette afficheur, la carte électronique 3a se chargeant de l'affichage de cette nouvelle information (dans le cas d'un afficheur électromécanique à palettes mobiles, affichage d'un nouveau caractère par une commande appropriée des électroaimants permettant la rotation des palettes).

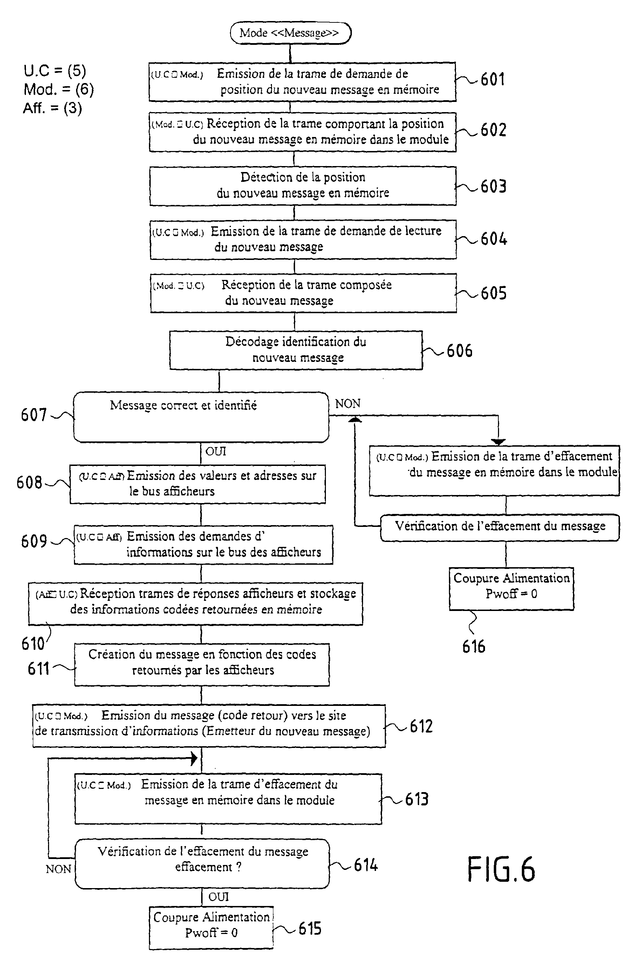

Si au contraire le signal C.d est détecté à l'état bas ( C.d = 0), le processeur de l'unité centrale 5 interroge ( via la liaison série Txd et RxD) le module d'émission /réception 6 , pour savoir si un nouveau message a été reçu et est enregistré en mémoire du module 6 ( figure 4/étape 406 et test 407). Si tel est le cas, on entre alors en mode de communication « message » (figure 4 / étape 408). Les principales étapes de fonctionnement de l'unité centrale 5 et du module émission/réception 6 dans ce mode " message" sont données par le synoptique de la figure 6. Dans ce cas, le module d'émission/réception 6, sur requête de l'unité centrale 5, envoie à cet dernière, sous la forme d'une trame de données, le message qui est enregistrée en mémoire de ce module (figure 6/ étapes 601 à 605). Après décodage et identification du message reçu comme étant effectivement un message de changement d'affichage (figure 6/ étape 606 et test 607), l'unité centrale commande les afficheurs 3 concernés via le bus 4 (figure 6 / étape 608).

### Fonction « coupure »

La coupure de l'alimentation de l'unité centrale 5 , et par là-même en cascade celle des afficheurs 3 et du module d'adaptation 7a de l'interface 7 est commandée par le processeur de l'unité centrale 5 au moyen du signal PWoff, en faisant passer ce signal à l'état bas (Pwoff = 0). Lorsque le module 7b de l'interface 7 détecte ce changement d'état, il commande l'ouverture du contacteur 7c. l'unité centrale 5 n'étant plus alimentée, le signal PWoff passe alors dans le troisième état (PWoff = ∞), et le dispositif d'affichage 1 est de nouveau à l'état « veille », jusqu'à réactivation de sa fonction « réveil » par un appel entrant reçu par le module d'émission/réception 6

En mode « DATA » (figure 5), la mise automatique en état « veille » du dispositif d'affichage 1 est réalisée normalement en fin de communication avec la station 2 (étape 514) , ou de manière prématurée en cas de détection d'un problème lors du déroulement du mode « DATA » (Etapes 515, 516,517).

En mode « message» , la mise automatique en état « veille » du dispositif d'affichage1 est réalisée normalement (figure 6/ étape 615) en fin de communication, après commande des afficheurs 3 par l'unité centrale 5, et effacement de ce message dans la mémoire du module 6 (figure 6/ étape 613 et test 614), ou de manière prématurée (figure 6/ étape 616) en cas de non reconnaissance par l'unité centrale 5 du message qui lui a été transmis par le module 6.

La mise automatique en état « veille » du dispositif d'affichage 1 est également réalisée lorsqu'aucun nouveau message n'a été reçu par le module d'émission/réception (figure 4 /étape 409).

### Figure 3 / module 7b et contacteur 7c

La figure 5 illustre un exemple de réalisation du module 7b et du contacteur 7c de l'interface 7. Dans cette réalisation particulière, la fonction « ou » est mise en oeuvre au moyen d'un transistor MOS (N) , commandé par les signaux C.d, M ou PwOff. Le contacteur 7c est réalisé au moyen d'un transistor MOS (P) commandé par le transistor MOS (N) précité. Lorsqu'au moins un des signaux C.d, M ou PwOff est à l'état haut, le transistor MOS (P) est passant ; il est fermé dans le cas contraire.

### Détection d'un afficheur en défaut et renvoi d'un message d'erreur

Selon un perfectionnement de l'invention, qui est indépendant des fonctions de « réveil » et de « mise en veille » précitées, et qui va à présent être détaillé, chaque dispositif d'affichage 1 est également conçu pour contrôler la position des éléments mobiles de chaque afficheur, et pour renvoyer à la station 2, via le module d'émission/réception 6, un message d'erreur en cas de détection d'une défaillance d'au moins un afficheur 3 (afficheur n'affichant pas l'information demandée). On évite ainsi avantageusement de devoir réaliser un contrôle visuel de l'information affichée par chaque afficheur 3 au moyen par exemple d'une caméra.

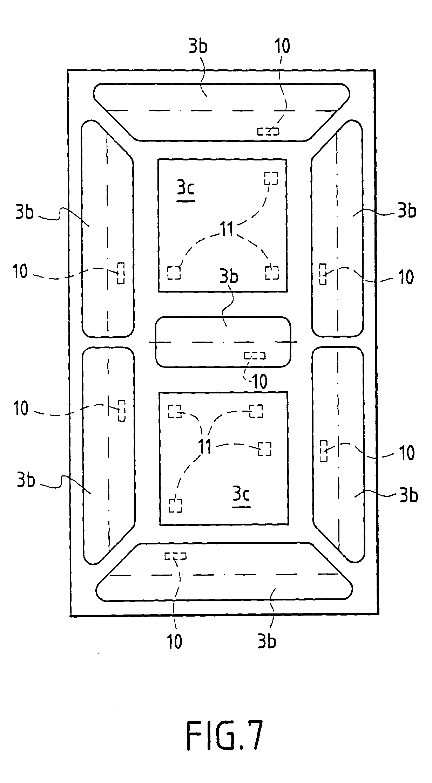

En référence à la figure 7, chaque afficheur 3 est équipé d'une pluralité de capteurs (10,11), chaque capteur étant prévu pour détecter la position effective d'un élément mobile de l'afficheur (palette aimantée rotative 3b dans le cas particulier de l'afficheur sept segments de la figure 7). De préférence, chaque capteur est constitué d'un aimant 10 et d'un détecteur magnétique 11, du type détecteur à effet Hall, qui délivre un signal de détection fonction de la présence ou non de l'aimant 10 associé dans le champ du détecteur 11. Sur chaque palette mobile 3b est fixé un aimant 10, qui de ce fait est mobile avec la palette. A proximité de chaque aimant 10 est monté le détecteur magnétique 11 associé, de manière fixe sur la structure 3d de l'afficheur 3 . Lorsqu'une palette 3b est en position visible (position des palettes de la figure 7), le détecteur 11 associé détecte la présence de l'aimant 10, et délivre un signal de détection dont l'état est caractéristique de cette position de la palette. A l'inverse, lorsqu'un palette est amenée par son électroaimant associé dans sa position non visible (palette orientée selon un plan transversal à celui de la figure 7, seule la tranche de la palette étant visible), le détecteur 11 associé ne détecte plus l'aimant et le signal de détection délivré par le détecteur 11 change alors d'état.

Il est bien entendu envisageable de remplacer chaque aimant 10 et son détecteur associé 11 par tout capteur remplissant la même fonction, c'est-à-dire permettant de détecter la position d'un élément d'affichage mobile 3b de l'afficheur 3 et délivrant un signal de détection caractéristique de la position de cet élément.

Pour chaque afficheur 3, l'information de détection (signaux de détection délivrés par les capteurs 10,11) est reçue en entrée par la carte électronique 3a de l'afficheur. Cette carte électronique est conçue en sorte de comparer localement cette l'information de détection avec l'information (dite ci-après information de commande d'affichage) qui lui a été communiquée par l'unité centrale 5 pour la commande de l'afficheur 3. Un différence entre ces deux informations traduit un défaut de fonctionnement de l'afficheur 3 sur au moins l'un de ses palettes 3b (mauvais positionnement d'au moins une palette mobile 3b , du fait par exemple d'un blocage mécanique de cette palette mobile 3b empêchant son changement de position). En cas de différence détectée, la carte électronique 3a calcule pour chaque palette 3b en défaut, un code d'erreur identifiant l'afficheur et la palette en défaut et stocke chaque code d'erreur en mémoire. En cas de conformité entre l'information de détection et l'information de commande d'affichage, la carte électronique 3a stocke en mémoire un code prédéterminé caractéristique d'un bon fonctionnement de l'afficheur 3.

L'unité centrale 5 est en outre programmée pour émettre successivement sur le bus 4 des demandes d'informations sur le bon fonctionnement de chaque afficheur 3 (figure 5/ étape 508 ou figure 6/étape 609). Pour chaque demande émise, la carte électronique 3a de l'afficheur 3 concerné renvoie à l'unité centrale le ou les codes d'erreur ou le code de bon fonctionnement selon le cas , ces codes étant stockées en mémoire vive par l'unité centrale 5 au fur et mesure de leur réception (figure 5/étape 509 ou figure 6/étape 610). Quand tous les afficheurs ont été interrogés et ont répondu, l'unité centrale 5 crée selon le cas un message d'erreur à partir des codes d'erreur qui lui ont été retournés par les afficheurs, ou un message prédéfinie de bon fonctionnement, pour le cas où tous les afficheurs lui ont retourné préalablement un code de bon fonctionnement ( figure 5 / étape 512 ou figure 6 / étape 611). Ce message est de préférence constitué par une trame de données comportant tous les codes retournés et permet avantageusement l'identification de l'afficheur 3 en défaut et de la ou les palettes 3b qui sont en défaut. Ce message est renvoyé par voie hertzienne à la station 2, via le module d'émission/ réception 6 du dispositif d'affichage 1 (figure 5/étape 512 ou figure 6/étape 513).

La station 2, après réception de ce message, est ainsi avantageusement informée soit du bon fonctionnement d'un dispositif d'affichage, soit d'une défaillance d'un ou plusieurs afficheurs 3 du dispositif d'affichage qui a émis ce message. Il est alors possible de prendre toutes les mesures nécessaire pour essayer de faire fonctionner correctement l'afficheur concerné ( par exemple renvoi par la station 2 à destination uniquement du dispositif d'affichage 1 en défaut d'un ou plusieurs messages successifs pour la commande du ou des afficheurs 3 en défaut, et après un nombre donné de tentatives infructueuses, dépannage sur site du ou des afficheurs).

## Revendications

1. Dispositif d'affichage (1) commandable à distance, du type comportant une source d'alimentation électrique (8), un ou plusieurs afficheurs (3) électromécaniques, une unité centrale (5) conçue pour commander chaque afficheur (3), et un circuit d'alimentation reliant la source d'alimentation électrique (8) à l'unité centrale (5) et à chaque afficheur (3), **caractérisé en ce qu'**il comprend au moins un contacteur (7c) qui permet d'ouvrir ou de fermer le circuit d'alimentation électrique de l'unité centrale (5) et de chaque afficheur (3), un module (6), qui en fonctionnement est en permanence alimenté par l'alimentation électrique (8), et qui permet la réception de données transmises par voie hertzienne, et l'envoi de ces données à l'unité centrale (5) pour la commande du ou des afficheurs (3), et un module (7b) de mise en veille et de réveil, qui en fonctionnement est en permanence alimenté par l'alimentation électrique (8), et qui a pour fonction d'une part de commander la fermeture du contacteur (7c) sous la commande d'au moins un premier signal (C.d et/ou M), délivré par le module de réception (6), et d'autre part de commander l'ouverture du contacteur (7c) sous la commande d'un deuxième signal ( Pwoff) délivré par l'unité centrale (5).

2. Dispositif selon la revendication 2 **caractérisé en ce que** le module (6) est conçu pour sauvegarder en mémoire les données reçues par voie hertzienne, et délivre un premier signal (M) caractéristique de la présence de données en mémoire du module de réception (6), et **en ce que** l'unité centrale (5) est programmée pour récupérer les données en mémoire du module de réception (6).

3. Dispositif selon la revendication 1 **caractérisé en ce que** le module (6) est conçu pour délivrer un premier signal (C.d) caractéristique de l'absence ou de la présence d'une onde porteuse, et **en ce que** l'unité centrale (5) est programmée pour recevoir des données transmises par voie hertzienne, via le module de réception (6).

4. Dispositif selon les revendications 2 et 3 **caractérisé en ce que** le module (7b) de mise en veille et de réveil permet de commander la fermeture du contacteur (7c) selon que le premier signal (C.d) délivré par le module de réception (6) est caractéristique de la présence d'une onde porteuse, ou selon que le premier signal (M) ) délivré par le module de réception (6) est caractéristique de la présence de données en mémoire du module (6).

5. Dispositif selon l'une quelconque des revendications 1 à 4 **caractérisé en ce que** la source d'alimentation électrique (8) est autonome, et de préférence rechargeable.

6. Dispositif selon la revendication 5 **caractérisé en ce que** la source d'alimentation électrique (8) comprend des capteurs solaires permettant de les recharger.

7. Dispositif selon l'une quelconque des revendications 1 à 6, **caractérisé en ce que** le module (6) permet en outre l'émission par voie hertzienne de données qui lui sont transmises par l'unité centrale (5), **en ce que** chaque afficheur (3) comporte une pluralité d'élément mobiles (3b) qui forment l'information visualisée, et est équipé de capteurs (10, 11) pour la détection de la position de chaque élément mobile (3b), et **en ce que** l'unité centrale (5) est programmée pour renvoyer par voie hertzienne, via le module (6) un message d'erreur en cas de défaillance détectée dans le positionnement d'au moins un élément mobile (3b) d'au moins un afficheur (3).

8. Dispositif selon la revendication 7 **caractérisé en ce que** le message d'erreur permet l'identification de l'afficheur (3) défaillant, et de préféence également du ou des éléments mobiles (3b) défaillants.

9. Ensemble d'affichage **caractérise en ce qu'**il comprend une station (2) et une pluralité de dispositifs d'affichage (1) distants visés à l'une quelconque des revendications 1 à 8, et **en ce que** la station (2) permet l'envoi par voie hertzienne, à tout ou partie des dispositifs d'affichage (1), de messages permettant la mise à jour des informations affichées.

10. Ensemble d'affichage selon la revendication 9 dont les dispositifs d'affichage (1) sont conformes à la revendication 7 ou 8, **caractérisé en ce que** la station (2) permet la réception par voie hertzienne de messages en provenance de chaque dispositif d'affichage (1).
